# EUROPEAN PATENT APPLICATION

(11) **EP 0 565 093 A1**
(43) Date of publication of application: **13.10.1993**
(21) Application number: 93105787.1
(22) Date of filing: 07.04.1993
(51) Int. Cl.: C09D 183/10, C09D 151/08, C08F 299/08

(54) **A method of producing diorganopolysiloxane/acrylic acid ester graft copolymer emulsion**

(30) Priority: 08.04.1992 JP 115359/92
(71) Applicant: Dow Corning Toray Silicone Company, Limited, Tokyo 103 (JP)
(72) Inventor: Ona, Isao, Toray Dow Corning Silicone Company Ltd., Ichihara-shi, Chiba Prefecture (JP); Ozaki, Masaru, Toray Dow Corning Silicone Co. Ltd., Ichihara-shi, Chiba Prefecture (JP)
(74) Representative: Spott, Gottfried, Dr.

(57) **Abstract**

The instant invention pertains to a method of producing, with high productivity, a diorganopolysiloxane/acrylic acid ester copolymer emulsion that is capable of forming a hardened film with high flexibility free from cracking even at extremely low temperatures, having a high film strength and low adhesion of soiling material after evaporation of water.

The method of producing the diorganopolysiloxane/acrylic acid ester copolymer emulsion comprises copolymerizing in the presence of a radical initiator, a mixture comprised of (A) 100 parts by weight of diorganopolysiloxane emulsion comprised of (a) 100 parts by weight of diorganopolysiloxane containing more than two silicon-bonded alkenyl groups in a single molecule and having the molecular chain end blocked with a hydroxy group, (b) 1-50 parts by weight of emulsifier, and (c) 50-1,000 parts by weight of water; (B) 1-100 parts by weight of acrylic acid ester monomer; and adding and mixing with 100 parts by weight of the resulting copolymer (C) 1-100 parts by weight of colloidal silica, and (D) 0.001-1.5 parts by weight of condensation-accelerating catalyst.

## Description

In the past, acrylic acid ester polymers have been widely used for coating agents of paints and fibers because of good film formability, environmental resistance, oil resistance, and resistance to soiling. However, the moisture permeability and water repellency are inferior, and therefore, especially when the material is used for coating concrete and external wall materials of buildings such as ALC, cracking occurs due to the permeation of moisture, cracking and deformation in the seams occur because of the moisture absorbed, and contraction of the outer wall, and dew condensation occurs because of the lack of moisture permeability. Furthermore, when the material is used as a coating agent for fabrics, cracking occurs at extremely low temperatures of -30°C to -40°C.

Diorganopolysiloxane/acrylic acid ester copolymer emulsion compositions have been suggested to overcome the above mentioned problems. For example Japanese Kokoku Patent No. Sho 54[1979]- 5007, Japanese Kokai Patent Application No. Hei 1[1989]-168972 and Great Britain Patent No. 1,161,072 disclose diorganopolysiloxane/acrylic acid ester copolymer emulsions. However, these emulsion compositions have problems such as inferior film strength, and cracking resulting from warping at extremely low temperatures.

It is an object of the present invention to provide a method of producing, with high productivity, a diorganopolysiloxane/acrylic acid ester copolymer emulsion that forms a strong, highly flexible film which is free from cracking, even under extremely low temperatures, and produces a hard film with less tendency to stain from the evaporation of water.

The object of the present invention can be achieved by a method of producing a diorganopolysiloxane/acrylic acid ester copolymer emulsion comprising copolymerizing in the presence of a free radical initiator, a mixture comprised of (A) 100 parts by weight of diorganopolysiloxane emulsion comprised of (a) 100 parts by weight of diorganopolysiloxane containing more than two silicon-bonded alkenyl groups in a single molecule and having the molecular chain end blocked with a hydroxy group, (b) 1-50 parts by weight of emulsifier and (c) 50-1,000 parts by weight of water; (B) 1-100 parts by weight of acrylic acid ester monomer; and adding and mixing with 100 parts by weight of the resulting copolymer (C) 1-100 parts by weight of colloidal silica, and (D) 0.001-1.5 parts by weight of condensation-accelerating catalyst.

The present invention pertains to a method of producing a diorganopolysiloxane/acrylic acid ester copolymer emulsion that forms a strong, flexible hard film with less soiling upon evaporation of water.

The method of producing the diorganopolysiloxane/acrylic acid ester copolymer emulsion comprises copolymerizing in the presence of a free radical initiator, a mixture comprised of (A) 100 parts by weight of diorganopolysiloxane emulsion comprised of (a) 100 parts by weight of diorganopolysiloxane containing more than two silicon-bonded alkenyl groups in a single molecule and having the molecular chain end blocked with a hydroxy group, (b) 1-50 parts by weight of emulsifier, and (c) 50-1,000 parts by weight of water; (B) 1-100 parts by weight of acrylic acid ester monomer; and adding and mixing with 100 parts by weight of the resulting copolymer (C) 1-100 parts by weight of colloidal silica, and (D) 0.001-1.5 parts by weight of condensation-accelerating catalyst.

The diorganopolysiloxane emulsion, component (A), is the primary agent of the copolymer emulsion produced by the manufacturing method of the present invention, and is comprised of (a) diorganopolysiloxane containing more than two silicon-bonded alkenyl groups in a single molecule and having the molecular chain end blocked with a hydroxy group, (b) water, and (c) an emulsifier. In this case, the diorganopolysiloxane (a) undergoes condensation with component (D), and forms a matrix polymer with a high degree of polymerization, the main chain of which is composed of a soft segment alone. In order to achieve this, both ends of component (a) must be blocked with hydroxy groups. Also, in order to be able to undergo free radical copolymerization with component (B), and to produce a strong, flexible film, it is necessary to include more than two alkenyl groups in a single molecule of component (a). Such alkenyl groups may be exemplified by, but not limited to, the vinyl group, allyl group, and hexenyl groups. The preferred alkenyl group is the vinyl group. For organic groups other than the alkenyl groups that are bonded to silicon atoms, alkyl groups such as methyl group, ethyl group, butyl group, hexyl group, octyl group, and aryl groups such as phenyl group, and others and substituted hydrocarbon groups such as 3,3,3-trifluoropropyl group can be mentioned as examples. The preferred organic group is the methyl group. The molecular structure of diorganopolysiloxane (a) described above is a straight-chain form, but a part of a branched type may be included. Also, the viscosity is generally in the range of 50-1,000,000 cSt (µm 2/5) at 25°C. It is preferred that the viscosity of the diorganopolysiloxane (a) be in the range of 100-500,000 cSt (µm 2/sec).

The diorganopolysiloxanes (a) may be exemplified by, but not limited to, dimethylpolysiloxane in which both ends of the molecule are blocked with silanol groups; methylphenylpolysiloxane; a copolymer of dimethylsiloxane and methylphenylsiloxane; a copolymer of methylvinylsiloxane or dimethylsiloxane, and methylvinylsiloxane, and others. These diorganopolysiloxanes can be synthesized by various methods known in the art. The methods for producing the diorganopolysiloxanes (a) include a method consisting of performing an ring-opening polymerization of cyclic diorganopolysiloxane a method consisting of performing a hydrolysis condensation of a straight-chain or branched diorganopolysiloxane containing groups that are capable of hydrolysis, such as alkoxy group, acyloxy group, and a method consisting of performing a hydrolysis of one or two or more types of diorganodihalosilane.

The emulsion component (b) is mainly used to emulsify the diorganopolysiloxane (a) and may be exemplified by anionic emulsifiers and nonionic emulsifiers. The anionic emulsifiers may be further exemplified by higher fatty acid salts, higher alcohol sulfates, alkylbenzene sulfonates, alkylnaphthalene sulfonates, alkylphosphones and polyethylene glycol sulfates, and others. The nonionic emulsifiers may be exemplified by polyoxyethylene alkyl phenyl ether, sorbitan fatty acid esters, polyoxyethylene sorbitan fatty acid esters, polyoxyalkylene fatty acid esters, polyoxyethylene polyoxypropylenes, and fatty acid monoglycerides and others. One type or a combination of two or more of these emulsifiers can be used. The amount of the emulsifier used is in the range of 1-50 parts by weight for 100 parts by weight of diorganopolysiloxane (a), with 2-30 parts by weight being preferable.

The amount of water, component (c), is an amount sufficient to prepare an aqueous emulsion through emulsification of components (A)-(D). The amount of water is preferably 50-1,000 parts by weight per 100 parts by weight of diorganopolysiloxane (a) and more preferably 100-500 parts by weight.

The diorganopolysiloxane emulsion, component (A), can be produced by, for example, emulsifying octamethylcyclotetrasiloxane and a cyclic diorganopolysiloxane having a methyl group and a vinyl group in an emulsification device such as a homogenizer with an anionic emulsifier such as dodecylbenzene sulfonate, for example, and performing a ring opening while heating at 70-90°C, and, subsequently, polymerizing at a low temperature in the range of 20-40°C as a diorganopolysiloxane emulsion having a vinyl group on the side chain, and the ends of the molecular chain blocked with hydroxy groups.

The diorganopolysiloxane/acrylic acid ester copolymer emulsion can then be produced by heating the diorganopolysiloxane emulsion (A) to 80-85°C, adding dropwise a free radical polymerization initiator, and then adding while stirring the acrylic acid ester monomer, component (B). The mixture is polymerized for 5-8 hours to produce the diacrylic acid ester copolymer.

Free radical polymerization initiators useful in the instant invention include, but are not limited to, ammonium persulfate, potassium persulfate, hydrogen peroxide, azobis-isobutyronitrile, dibutyl peroxide, benzoyl peroxide, and others. The acrylic acid ester monomer, component (B), may be exemplified by, but not limited to, methyl acrylate, ethyl acrylate, butyl acrylate, octyl acrylate, methyl methacrylate, ethyl methacrylate, propyl methacrylate, butyl methacrylate, octyl methacrylate, 2-ethylhexyl methacrylate, hydroxyethyl methacrylate, and others. In addition to the acrylic acid ester monomer a small amount of acrylic acid, methacrylic acid, acrylamide, acrylonitrile, vinylchloride, styrene, α-methylstyrene, vinyl acetate, vinyltrialkoxysilane, vinyltriacetoxysilane, γ-methacryloxypropyltrimethoxysilane, and others can be further included as long as the objective of the present invention is not inhibited.

The amount of component (B) added is in the range of 1-100 parts by weight for 100 parts by weight of component (A), and a range of 5-50 parts by weight is further desirable.

The colloidal silica of component (C) is the crosslinking agent. The colloidal silica may be exemplified by, but not limited to, aerosol colloidal silica, precipitated colloidal silica, and a colloidal silica with a grain diameter of 0.0001-0.1 mm stabilized with sodium, ammonium, or aluminum. The mixing ratio of colloidal silica is 1-100 parts by weight for 100 parts by weight of diorganopolysiloxane emulsion (A); 2-50 parts by weight is desirable, and 5-30 parts by weight is especially desirable.

The condensation-accelerating catalyst, component (D), is used to accelerate the condensation of the copolymer comprised of component (A) and component (B) and the colloidal silica of component (C). The condensation-accelerating catalyst may be exemplified by, but not limited to, organic acid metal salts such as dibutyltin laurate, dibutyltin diacetate, dibutyltin dioctate, tin laurate, zinc octenate, titanates such as tetrabutyltitanate, tetrapropyltitanate, dibutoxytitanium-bis(ethylacetoacetate), and others; amine compounds such as n-hexylamine, and guanidine, and others; and hydrochloric acids. It is desirable for the condensation-accelerating catalyst to be used in an emulsion form prepared with an emulsifier and water by known methods. The amount of the condensation-accelerating catalyst added is 0.001- 1.5 parts by weight for 100 parts by weight of diorganopolysiloxane emulsion (A); and 0.05-1 part by weight is further desirable.

In the method of the present invention, in order to promote a sufficient degree of crosslinking in the emulsion, and to form a strong film by simply evaporating the water, it is desirable to adjust the pH of the emulsion to 9-12, and to ripen the emulsion prior to use. Useful pH modifiers may be exemplified by, but not limited to, amines such as dimethylamine, and ethylenediamine, and others; and alkali metal hydroxides such as sodium hydroxide and potassium hydroxide, and others. Organic amines are the preferred modifier. The organic amines, in addition to those described above may include, monoethanolamine, triethanolamine, morpholine, and 2-amino-2-methyl-1-propanol. After adjusting the pH as described above, ripening is performed at a constant temperature for a constant period of time. For the ripening temperature, a temperature that does not destroy the emulsion, in other words, 10-95°C is desirable, and 15-50°C is further desirable. The ripening time is set according to the ripening temperature. For example more than 1 week under temperature conditions of 25°C, and more than 4 days under temperature conditions of 40°C is desirable.

The diorganopolysiloxane/acrylic acid ester copolymer emulsion produced as described above has superior storage stability at room temperature, and it can be easily cured to form an elastomer at room temperature when the water component is removed.

When the storage stability at room temperature is not essential, the pH of the base emulsion described above may be lower than 9. Furthermore, the diorganopolysiloxane/acrylic acid ester copolymer emulsion produced in the present invention may include, for example, an appropriate amount of thickeners such as carboxymethylcellulose, methylcellulose, hydroxyethylcellulose, polyvinyl alcohol, polyacrylic acid, fillers, pigments, dyes, heat-resistance agents, preservatives, and penetrants such as aqueous ammonia and others.

So that those skilled in the art can understand and appreciate the invention taught herein, the following examples are presented.

In the examples, "parts" refers to parts by weight, "%" refers to wt%, and "cSt" refers to centistokes. It should be noted that the formation of the film and evaluation of various properties were based on the methods explained below.
(1) Film formation: 30 g of diorganopolysiloxane/acrylic acid ester copolymer emulsion were poured onto a polytetrafluoroethylene sheet in an aluminum mold with measurements of 15 x 11 x 0.5 cm, stored for 3 days at a temperature of approximately 2.5°C, and a film was formed.
(2) Measurement of physical properties of the film: Samples were produced with the dumbbell model 3763-6W, and the Tensilon UTM-1-2500SL of Toyo Boldwin Co. was used, and the tensile strength (kg_{f}/cm²), and elongation (%) were measured at a pull rate of 1-2500 SL 50 cm/min under two conditions, at 25°C and- 20°C.
(3) Film bending test: A Mini-subzero Model MC-71 of Tabai Co. Ltd. was used, and a sample with measurements of 4 x 2 cm (produced under the conditions described above, thickness, approximately 0.8 mm) was placed in the machine set at -30°C for 2 hrs., one end of the sample piece was held with forceps and the other end was pulled up, and the bending test was performed and the result was classified as in the following.
   - ϑ: No change at all
   - x: Ruptured after 1 time
   - Δ: Ruptured after approximately 10 times
(4) Resistance to soiling by the film: 2 g of acetylene black were uniformed dispersed with 98 parts of liquid paraffin. 3 parts of polyoxyethylene (6 mol) nonylquinol ether and 2 parts of polyoxyethylene nonylquinol ether (12 mol) were added to 40 parts of the mixture produced and uniformly mixed, 55 parts of water were added, emulsified and dispersed in a homomixer homogenizer and a soiling solution was prepared. The soiling solution was diluted 100 times with water, and a film with a measurement of 5 x 5 cm (thickness is approximately 0.8 mm) was soaked in said diluted soiling solution for 7 days. After removal, the film was wiped with clean gauze that had been dipped in water. After that, the film was placed on white filter paper, and the degree of soiling was examined using the Bree scale of JISL-0805 for soiling, and the results were divided into 5 classifications.
(5) Outdoor exposure test of the film: Using a brush, a full-strength emulsion was coated onto the surface of an ALC with a measurement of 10 x 10 x 3 cm, the sample was suspended from the eaves of the roof of a building located in the industrial area of the City of Ichihara, Chiba Prefecture for 6 months, then water was run over the sample, and it was dried. The exposed ALC, and an ALC that had not been exposed to the outdoor test were compared, and the differences were measured with the Gray scale for soiling of JISL-0805, and classified into 5 classifications.
(6) Tackiness of the film: The feel of the films produced in test (1) described above were evaluated by touching with the fingertips, and classified as shown below.
   - ϑ: Free from tackiness
   - Δ: Slight degree of tackiness
   - x: High degree of tackiness

### EXAMPLE 1

2 parts of dodecylbenzene sulfonate and 53.64 parts of water were added to a mixture comprised of 40 parts of dimethyl-cyclicsiloxane and 4 parts of methylvinylcyclicsiloxane and uniformly mixed in a mixer for 30 min, passed two times through a homogenizer type emulsifier under a pressure of 350 kg_{f}/cm² and a uniform emulsion was produced. After that, the emulsion was maintained at 85-90°C for 2 hr., cooled to 20-30°C, and polymerized for 3 hr. Then, 0.36 part of sodium carbonate was added to the reaction product and it was neutralized to produce a base material dimethylsiloxane/methylvinylsiloxane copolymer (base emulsion A: the viscosity of the diorganopolysiloxane extracted was 105,000 cSt [µM 2/sec).).

4 parts of methyl methacrylate were added to 90 parts of base emulsion A, mixed for 30 min, and a uniform dispersion of methyl methacrylate was formed. This mixture was transferred to a three-necked flask, and added to a solution prepared by dissolving 0.2 part of potassium persulfate in 5.8 parts of water, and the reaction system was purged with nitrogen gas. After that, the temperature was increased to 70-80°C, and the temperature was maintained for 3 hours so as to copolymerize dimethylsiloxane/methylvinylsiloxane copolymer in base emulsion A and the methyl methacrylate (Emulsion A-1). It should be noted that a film with very high transparency can be formed when a droplet of said emulsion is dropped onto a glass sheet and dried. Thus, it was confirmed that dimethylsiloxane/methylvinylsiloxane and methyl methacrylate were uniformly copolymerized.

15 parts of colloidal silica, 0.2 part of diethylamine as a pH modifier, and 0.3 part of a 50% emulsion of dibutyltin laurate were added to 85.0 parts of base emulsion A-1, and uniformly dissolved and dispersed, ripened at 45 ± 3°C for 1 week, and a diorganopolysiloxane/methyl methacrylate copolymer emulsion (Emulsion A-2) was produced. A film was produced by the film formation method described above, and physical properties of the film, film bending test, resistance to soiling by the film, and outside exposure test of the film coated on ALC were carried out. These results are shown in Table I.

### COMPARATIVE EXAMPLE 1

The colloidal silica, diethylamine as a pH modifier, 50% emulsion of dibutyltin laurate were added to base emulsion A instead of Emulsion A-1 as used in Example 1, and a dimethylpolysiloxane emulsion (silicone water-based elastomer emulsion) was produced as described in Example 1. Properties of the emulsion produced were measured as in Example 1, and results are shown in Table I.

### COMPARATIVE EXAMPLE 2

A dimethylpolysiloxane/methacrylic acid copolymer emulsion was produced as described in Example 1 except that the colloidal silica, diethylamine used as a pH modifier, and 50% emulsion of dibutyltin laurate were omitted. Properties of the emulsion produced were measured as in Example 1, and results are shown in Table I.

### COMPARATIVE EXAMPLE 3

A dimethylpolysiloxane/methacrylic acid copolymer emulsion was produced as described in Example 1 except the diethylamine used as a pH modifier, and a catalyst were omitted. Properties of the emulsion produced were measured as in Example 1, and results are shown in Table I.

### COMPARATIVE EXAMPLE 4

A solution comprised of 45 parts water, 2.5 parts of dodecylbenzene sodium sulfonate type cationic surfactant, 1.5 parts of polyoxyethylene octyl phenol ether type nonionic surfactant agent (14.5 mole), and 2 parts of sodium persulfate were added to a four-necked flask with a separatory funnel; then, 11 parts of methyl methacrylate and 33 parts of ethyl acrylate were added and the temperature was increased to 75°C. Subsequently, a mixture comprised of methyl methacrylate and ethylacrylate was gradually added dropwise to the flask from the separatory funnel; after the addition, the mixture was maintained for 5 hrs and a copolymer emulsion of methyl methacrylate and ethyl acrylate was produced.

**Table I**

| | | Example 1 | Comparative Examples | | | |
|---|---|---|---|---|---|---|
| | | | 1 | 2 | 3 | 4 |
| Tackiness of the film (25°C) | | ϑ | Δ | Δ | Δ | ϑ |
| Strength (kg_{f}/cm²) | 25°C | 45 | 31 | 37 | 35 | >100 |
| | -20°C | 69 | 40 | 52 | 50 | >100 |
| Elongation (%) | 25°C | 880 | 750 | 610 | 590 | 530 |
| | -20°C | 820 | 800 | 550 | 530 | 2 |
| Bending test | 25°C | ϑ | ϑ | ϑ | ϑ | ϑ |
| | -20°C | ϑ | ϑ | Δ | Δ | x |
| Resistance to soiling (Class) | | 4^{∼}5 | 1^{∼}2 | 2^{∼}3 | 2^{∼}3 | 5 |
| Outdoor exposure test (Class) | | 5 | 2^{∼}3 | 3^{∼}4 | 3^{∼}4 | 5 |
| Overall evaluation as ALC coating material for cold-weather regions | | A | B | C | C | D |
| A Suitable B Not suitable (Resistance to soiling inferior, soiling likely to occur during the outdoor exposure test) C Not suitable (Resistance to soiling is especially inferior) D Not suitable (Not suitable for low-temperature application) | | | | | | |

As shown in Table I, the copolymer emulsion of diorganopolysiloxane/methyl methacrylate produced by the method of the present invention exhibits high strength and elongation at low temperatures and at ambient temperature (25°C), and the bending property of the film at -30°C was good. The film was free from tackiness and was also free from soiling when outdoor exposure test was performed; it was excellent as an ALC coating for cold-weather regions.

### EXAMPLE 2

1.8 parts of dodecylbenzene sulfonate and 57.04 parts of water were added to a mixture comprised of 32 parts of dimethylcyclics, and 8 parts of methylvinylcyclics, and passed two times through a homogenizing type emulsifier under a pressure of 380 kg_{f}/cm², and a dimethylpolysiloxane emulsion was produced. The dimethylpolysiloxane emulsion was heated to 80-85°C, and maintained at this temperature for 2 hrs. The emulsion was cooled to 25-30°C and maintained at said temperature for 4 hr. to carry out polymerization. Following polymerization a 35% solution of triethanolamine was added and the emulsion was neutralized (base emulsion B).

50 parts of ethyl acrylate, 6 parts of methyl methacrylate, and 2 parts of hydroxymethacrylate were added to 350 parts of base emulsion B and mixed for 30 min and uniformly dispersed. A solution was prepared by dissolving 1 part ammonium persulfate in 145 parts water was added and maintained at 80 ± 11°C, and copolymerization was carried out (Emulsion B-1).

10 parts of colloidal silica (produced by Nissan Chemical Co., product name Snowtex 40), 0.2 parts of diethylamine, and a condensation reaction catalyst containing 25% of dibutyltin laurate, and 25% of zinc octylate were added to 90 parts of emulsion B-1. The mixture produced was ripened at 25°C for 2 weeks, and dimethylpolysiloxane/hydroxy methacrylate copolymer (emulsion B-2) was produced.

As a comparative example, in the above, 0.046 part of hexamethyldisiloxane was added as an end blocking agent during the polymerization of the dimethylpolysiloxane emulsion, and a dimethylpolysiloxane/hydroxymethacrylate copolymer emulsion was produced as described above. It should be noted that the end of the diorganopolysiloxane of Example 2 is blocked with hydroxy groups, therefore said hydroxy groups and the colloidal silica produce a condensation reaction. But in this comparative example, the end is blocked with a trimethylsiloxy group, therefore, a condensation reaction with colloidal silica is not produced.

Film formation was carried out for these emulsions as in Example 1, the tensile strength (kg_{f}/cm²), elongation (%), and bending test of the film were performed for these films. In addition, these emulsions were coated onto a fine nylon taffeta fabric with an applicator to produce a coating thickness of 120 mm. Subsequently, the coated fabric was placed in an oven at 110°C and dried. The coated fabric was stored in the atmosphere at -30°C, and the appearance of the coated fabric (roughness), and crease resistance of the film were examined. These results are shown in Table II.

**Table II**

| | | Example 2 | Comparative Example |
|---|---|---|---|
| Strength (kg_{f}/cm²) | 25°C | 39 | 29 |
| | -20°C | 48 | 38 |
| Elongation (%) | 25°C | 670 | 550 |
| | -20°C | 610 | 11 |
| Bending test | 25°C | ϑ | ϑ |
| | -20°C | ϑ | x |
| Appearance and condition of the coated fabric at -30°C | | Hardly any change at all in appearance | Crinkles, Film cracked upon rubbing Brittle. |
| Overall evaluation as a waterproofing for clothes for mountaineering in cold temperature regions | | Suitable. Small differences at ambient temp. and low temps | Not Suitable. Film is brittle at low temp., cracking occurs at creases, water permeation occurs. |

As the results in Table II show, it is clear that differences in the emulsion of the present invention between ambient temperature and low temperature are small, and it is suitable for use to waterproof clothes for mountaineering in cold-temperature regions.

### EXAMPLE 3

5 parts of nonionic emulsion of polyoxyethylene (8 mol) octyl phenyl ether were added to 50 parts of base emulsion A synthesized in Example 1. 16 parts of methyl methacrylate, 20 parts of ethyl acrylate, 8 parts of butyl acrylate, and 1.5 parts of methyl acrylate were added as in Example 1. 0.5 part of potassium persulfate was further added, and diorganopolysiloxane/acrylic acid ester copolymer emulsion was synthesized under exactly the same conditions described in Example 1. Then, the amount of colloidal silica used in Example 1 was changed to 7.5 parts, and the emulsion of the present invention was produced.

The properties of the emulsion produced were measured as in Example 1. Furthermore, the emulsion produced was diluted two times with water and coated onto a light-weight block, and a sample for the soiling test evaluation was produced. The sample was allowed to stand on the roof of a 4-story building located the industrial area of the City of Ichihara, Chiba Prefecture, and exposed to weather for 7 months.

In addition, for comparison, the silicone water-based elastomer emulsion comprised of silicone/colloidal silica produced in Comparative Example 1 described above was used. The results measured are shown in Table III.

**Table III**

| | Example 3 | Comparative Example |
|---|---|---|
| Resistance to soiling (class) | 5 | 1^{∼}2 |
| Soiling of a coated light-weight block during outdoor exposure | 5 | 3 |
| Overall evaluation as a coating material for blocks | Excellent | Not Suitable. Soil resistance is poor, soiling after 7 months is heavy |

As the results show, the emulsion of the present invention is suitable as a coating base (pigments, etc., were added to the composition) for a coating material for light-weight blocks used as building materials, and when used as a coating composition, soil adsorption did not occur, and it was suitable.

### EXAMPLE 4

Instead of the 16 parts of methyl methacrylate used in Example 3, styrene was used, and an emulsion of the present invention was produced as in Example 3. Properties of the emulsion produced were measured as in Example 3. These results are shown in Table IV.

**Table IV**

| | Example 4 | Comparative Example |
|---|---|---|
| Resistance to soiling (class) | 5 | 1^{∼}2 |
| Soiling of a coated light-weight block exposed outdoors | 5 | 3 |
| Overall evaluation as a coating material for blocks | Excellent | Not Suitable. Soil resistance is poor, soiling after 7 months is heavy |

As shown in these results, the degree of soiling adhesion by soiling material was low in the emulsion of the present invention produced, and it was suitable for use as a coating base for a coating material for light-weight blocks used for building materials.

### EXAMPLE 5

A dimethylpolysiloxane/methyl methacrylate copolymer emulsion was synthesized as in Example 1 except 40 parts of dimethylpolysiloxane with a viscosity of 65 cSt (µM 2/5) shown in the formula HO[(CH₃)₂SiO]₅₀H, in which the ends of the molecular chain are blocked with hydroxy groups, were used instead of dimethylcyclics. The emulsion produced was coated with a brush onto a light-weight block used for building materials as in Example 3, and evaluation as a coating material was carried out. These results are shown in Table V.

**Table V**

| | Example 5 | Comparative Example 5 |
|---|---|---|
| Resistance to soiling (class) | 5 | 1^{∼}2 |
| Soiling of a coated light-weight block during outdoor exposure | 5 | 3 |
| Overall evaluation as a coating material for blocks | Excellent | Not Suitable. Soil resistance is poor, soiling after 7 months is heavy |

According to the method of the present invention, it is possible to produce, with high productivity, a diorganopolysiloxane/acrylic acid ester copolymer emulsion that is capable of forming a hardened film with high flexibility free from cracking even at very low temperatures, has a high film strength and a low adhesion of soiling material after evaporation of the water.

## Claims

1. A method for producing a diorganopolysiloxane/acrylic acid ester copolymer emulsion wherein the method comprises copolymerizing in the presence of a free radical initiator, a mixture comprised of
(A) 100 parts by weight of a diorganopolysiloxane emulsion comprised of (a) 100 parts by weight of a diorganopolysiloxane containing more than two silicon-bonded alkenyl groups in a single molecule and having the molecular chain end blocked with a hydroxy group, (b) 1-50 parts by weight of an emulsifier, and (c) 50-1,000 parts by weight of water; and
(B) 1-100 parts by weight of an acrylic acid ester monomer; and adding and mixing with 100 parts by weight of the resulting copolymer
(C) 1-100 parts by weight of colloidal silica, and
(D) 0.001-1.5 parts by weight of a condensation-accelerating catalyst.

2. A method as claimed in claim 1 wherein in the diorganopolysiloxane emulsion (A) the emulsifier (b) is selected from an anionic or nonionic emulsifier.

3. A method as claimed in claim 2 wherein in the diorganopolysiloxane emulsion (A) there is 2 to 30 parts by weight of emulsifier (b).

4. A method as claimed in claim 1 wherein the acrylic acid ester monomer is selected from methyl acrylate, ethyl acrylate, butyl acrylate, octyl acrylate, methyl methacrylate, ethyl methacrylate, propyl methacrylate, butyl methacrylate, octyl methacrylate, 2-ethylhexyl methacrylate, hydroxyethyl methacrylate, and mixtures thereof.

5. A method as claimed in claim 4 wherein the acrylic acid ester monomer is added at 5 to 50 parts by weight.

6. A method as claimed in claim 1 wherein the colloidal silica (C) is added at 2 to 50 parts by weight.

7. A method as claimed in claim 1 wherein the condensation-accelerating catalyst is selected from organic acid metal salts, amine compounds and hydrochloric acids.

8. A method as claimed in claim 7 wherein the condensation-accelerating catalyst is added at 0.05-1 part by weight.
